# EUROPÄISCHE PATENTSCHRIFT

(11) **EP 3 374 242 B1**
(45) Veröffentlichungstag und Bekanntmachung des Hinweises auf die Patenterteilung: **23.02.2022**
(21) Anmeldenummer: 16787440.3
(22) Anmeldetag: 26.10.2016
(51) Int. Cl.: B60W 40/09

(54) **VERFAHREN UND VORRICHTUNG ZUM ANALYSIEREN EINER FAHRWEISE EINES FAHRERS EINES FAHRZEUGS**
METHOD AND DEVICE FOR ANALYSING A DRIVING MANNER OF A DRIVER OF A VEHICLE
PROCÉDÉ ET DISPOSITIF D'ANALYSE DE LA FAÇON DONT UN CONDUCTEUR CONDUIT UN VÉHICULE

(30) Priorität: 10.11.2015 DE 102015222033
(43) Veröffentlichungstag der Anmeldung: 19.09.2018
(73) Patentinhaber: Robert Bosch GmbH, 70442 Stuttgart (DE)
(72) Erfinder: KNIEP, Stefan Andreas, 31134 Hildesheim (DE); RADKE, Tobias, 70469 Stuttgart (DE); SCHULZ, Udo, 71665 Vaihingen/Enz (DE)
(86) Internationale Anmeldenummer: PCT/EP2016/075755
(87) Internationale Veröffentlichungsnummer: WO 2017/080822

(56) Entgegenhaltungen:
- DE-A1-102010 038 970
- DE-U1-202013 007 354
- US-A1- 2011 043 635
- US-A1- 2014 244 150

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Die Fahrweise eines Fahrers eines Fahrzeugs hat Auswirkungen auf das Lastprofil eines Fahrzeugs, dessen Kenntnis beispielsweise für ein Energiemanagement des Fahrzeugs relevant ist.

Aus der US-A-2011/043635 ist ein Verfahren zum Analysieren einer Fahrweise eines Fahrers eines Fahrzeugs bekannt, welches Verfahren die folgenden Schritte umfasst:
Einlesen eines Umweltparameters, der einen Übergang in einem Umfeld des Fahrzeugs repräsentiert;
Einlesen eines Fahrzeugparameters, der eine Änderung eines Fahrzustandes des Fahrzeugs in der Nähe einer dem Übergang zugeordneten Position repräsentiert; und
Ermitteln eines Verhaltensparameters unter Verwendung des Umweltparameters und des Fahrzeugparameters.

### Offenbarung der Erfindung

Vor diesem Hintergrund werden mit dem hier vorgestellten Ansatz ein Verfahren zum Analysieren einer Fahrweise eines Fahrers eines Fahrzeugs, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Die Fahrweise eines Fahrers wird häufig durch eine Änderung eines Umweltparameters, beispielsweise einen Übergang zwischen zwei unterschiedlichen Geländeoberflächenformen in einem Umfeld des Fahrzeugs beeinflusst. Wird eine solche Beeinflussung erkannt, so kann diese verwendet werden, um einen die Fahrweise repräsentierenden Verhaltensparameter zu ermitteln. Weitere Änderungen eines Umweltparameters können beispielsweise die Fahrbahn betreffen (Fahrbahnsteigungen, Kurvenradien, Haftung, Fahrbahnbelag, Fahrbahnrauigkeit, Querkanten, Spurrinnen, Schlaglöcher, Haftung), die Sichtverhältnisse betreffen (Licht, Klarheit, Richtung und Intensität der Sonneneinstrahlung, Schatten) oder Windverhältnisse, Feuchtigkeit, Regen, Eis/Schnee oder Verkehr betreffen.

Vorteilhafterweise kann auf diese Weise zumindest ein Verhaltensparameter angelernt werden, der wiederum verwendet werden kann, um beispielsweise eine Vorhersage über ein Geschwindigkeitsprofil oder ein Lastprofil des Fahrzeugs zu erstellen.

Ein Verfahren zum Analysieren einer Fahrweise eines Fahrers eines Fahrzeugs umfasst die folgenden Schritte:
Einlesen eines Umweltparameters, der einen Übergang in einem Umfeld des Fahrzeugs repräsentiert;
Einlesen eines Fahrzeugparameters, der eine Änderung eines Fahrzustands des Fahrzeugs in der Nähe einer dem Übergang zugeordneten Position repräsentiert; und
Ermitteln eines Verhaltensparameters unter Verwendung des Umweltparameters und des Fahrzeugparameters, wenn eine Änderung des Umweltparameters um mindestens einen vordefinierten Schwellenwert gegenüber einem vorangegangenen Umweltparameter vorliegt, wobei der Verhaltensparameter eine durch den Übergang hervorgerufene Änderung einer Fahrweise des Fahrers repräsentiert.

Bei dem Fahrzeug kann es sich um ein straßengebundenes Fahrzeug, wie beispielsweise einen Pkw handeln.

Der Umweltparameter kann beispielsweise einen Übergang zwischen zwei unterschiedlichen Geländeoberflächenformen einen Übergang zwischen zwei unterschiedlichen Bewuchsformen, einen Übergang zwischen zwei unterschiedlichen Fahrbahneigenschaften, einen Übergang zwischen zwei unterschiedlichen Landschaftsbildern oder einen Übergang zwischen zwei unterschiedlichen Bebauungsformen repräsentieren. Auf diese Weise können unterschiedliche Arten von Übergängen durch einen oder mehrere Umweltparameter abgebildet werden. Auf diese Weise kann die Auswirkung unterschiedlicher Übergänge bei der Analyse der Fahrweise des Fahrers berücksichtigt werden.

Bei dem Umfeld des Fahrzeugs kann es sich um eine seitlich neben und/oder in Fahrtrichtung vor dem Fahrzeug angeordnete Umgebung handeln. Bei dem Übergang zwischen den Geländeoberflächenformen kann es sich um einen durch den Fahrer bewusst oder unbewusst wahrnehmbaren Geländewechsel handeln. Unter dem Umweltparameter können ein elektrisches Signal oder digitale Daten verstanden werden. Der Umweltparameter kann anzeigen, um was für eine Art von Übergang es sich handelt und zusätzlich oder alternativ, an welcher Position sich der Übergang befindet. Die dem Übergang zugeordnete Position kann auf der durch das Fahrzeug befahrenen Fahrbahn auf Höhe des Übergangs liegen. Der Fahrzustand kann beispielsweise eine Geschwindigkeit, eine Fahrtrichtung oder eine Antriebsleistung des Fahrzeugs betreffen. Bei der Änderung des Fahrzustands kann es sich um eine durch den Fahrer ausgelöste Änderung handeln. Der Fahrzeugparameter, bei dem es sich um ein elektrisches Signal oder um digitale Daten handeln kann, kann die Änderung des Fahrzustands anzeigen. Der Verhaltensparameter kann eine Zuordnung zwischen dem Übergang und der Änderung des durch den Fahrzeugparameter abgebildeten Fahrzustands abbilden. Dazu können der Umweltparameter und der Fahrzeugparameter im Schritt des Ermittelns auf eine geeignete Weise miteinander kombiniert oder verknüpft werden, um den Verhaltensparameter zu ermitteln. Beispielsweise kann eine solche Kombination unter Verwendung einer Korrelationsvorschrift durchgeführt werden. Für unterschiedliche Arten von Übergängen können unterschiedliche Verhaltensparameter ermittelt werden. Dazu können die Schritte des Einlesens und Ermittelns wiederholt ausgeführt werden. Um die Änderung des Umweltparameters zu erkennen, kann das Verfahren einen Schritt des Erkennens des Umweltparameters um mindestens den vordefinierten Schwellenwert gegenüber dem vorherigen Wert umfassen.

Der Schwellenwert kann beispielsweise eine bestimmte durchschnittliche Baumhöhe oder ein bestimmter Reibwert der Fahrbahn sein.

Eventuell reagiert der Fahrer nicht genau an der Stelle des Übergangs, sondern früher oder auch später. Wie viel früher oder später wird gemäß einer Ausführungsform auch gelernt. Beispiel: Einige Fahrer bremsen generell schon deutlich vor einem Geschwindigkeitslimit, andere punktgenau, wiederum andere bremsen erst später (bzw. rollen aus).

Gemäß einer Ausführungsform repräsentiert der Fahrzeugparameter eine Geschwindigkeitsänderung des Fahrzeugs. Ein solcher Fahrzeugparameter kann im Schritt des Einlesens über eine Schnittstelle zu einem die Geschwindigkeit des Fahrzeugs erfassenden Geschwindigkeitssensor eingelesen werden. Geschwindigkeitsänderungen des Fahrzeugs haben einen großen Einfluss auf das Lastprofil des Fahrzeugs. Daher ist die Verwendung der Geschwindigkeit als Fahrzeugparameter vorteilhaft, um eine gute Vorhersage bezüglich des Lastprofils des Fahrzeugs erstellen zu können.

Das Verfahren kann einen Schritt des Einlesens einer Information über eine Verkehrsbehinderung im Bereich der Position des Übergangs umfassen. In diesem Fall kann der Schritt des Ermittelns des Verhaltensparameters abhängig von der Information über die Verkehrsbehinderung ausgeführt werden. Unter einer Verkehrsbehinderung kann beispielsweise ein Stau oder eine Baustelle verstanden werden. Liegt eine solche Verkehrsbehinderung vor, so kann davon ausgegangen werden, dass der Übergang zwischen den unterschiedlichen Geländeformen nur eine untergeordnete Rolle bezüglich der Änderung des Fahrzustands spielt. Daher ist es günstig, in einem solchen Fall die Ermittlung des Verhaltensparameters nicht durchzuführen, um keinen verfälschten Verhaltensparameter zu erhalten. Zeigt die Information über die Verkehrsbehinderung dagegen keine Verkehrsbehinderung an, so kann der Schritt des Ermittelns durchgeführt werden. Alternativ kann auch die Störung, also die Verkehrsbehinderung, als Objekt erfasst werden und es kann die Reaktion des Fahrers auf die Störung gelernt werden.

Das Verfahren kann einen Schritt des Einlesens eines Objektparameters umfassen, der ein Objekt in einem Umfeld des Fahrzeugs repräsentiert. In diesem Fall kann der im Schritt des Einlesens eingelesene Fahrzeugparameter eine Änderung des Fahrzustands des Fahrzeugs in der Nähe einer dem Objekt zugeordneten Position repräsentieren. Im Schritt des Ermittelns kann ein weiterer Verhaltensparameter unter Verwendung des Objektparameters und des Fahrzeugparameters ermittelt werden. Der weitere Verhaltensparameter kann dabei eine durch das Objekt hervorgerufene Änderung der Fahrweise des Fahrers repräsentieren. Auf diese Weise können auch nicht durch Übergänge zwischen Geländeformen hervorgerufene Änderungen in der Fahrweise des Fahrers bei der Analyse der Fahrweise berücksichtigt werden.

Beispielsweise kann ein solcher Objektparameter ein Objekt in Form eines Verkehrszeichens oder ein Objekt in Form eines Orts von Interesse oder ein Objekt in Form eines anderen Fahrzeugs repräsentieren. Gemäß einer Ausführungsform kann es sich bei dem Verkehrszeichen um ein Verkehrszeichen handeln, das lediglich eine Information für den Fahrer enthält. Bei dem Ort von Interesse, auch Point of Interest genannt, kann es sich um einen für den Fahrer gegebenenfalls bedeutsamen Ort handeln. Nachdem solche Objekte ebenfalls einen Einfluss auf die Fahrweise des Fahrers haben können, ist es sinnvoll, diese bei der Ermittlung von Verhaltensparametern zu berücksichtigen. Insbesondere können auch andere Fahrzeuge als Objekte aufgefasst werden und es kann gelernt werden, wie der Fahrer auf andere Fahrzeuge reagiert.

Um einen Verhaltensparameter möglichst genau bestimmen zu können, kann der Schritt des Einlesens eines Umweltparameters wiederholt ausgeführt werden, um einen weiteren Umweltparameter einzulesen, der beispielsweise einen weiteren Übergang zwischen den zwei unterschiedlichen Geländeoberflächenformen in einem weiteren Umfeld des Fahrzeugs repräsentiert. Entsprechend kann der Schritt des Einlesens eines Fahrzeugparameters wiederholt ausgeführt werden, um einen weiteren Fahrzeugparameter einzulesen, der beispielsweise eine weitere Änderung des Fahrzustands des Fahrzeugs an einer dem weiteren Übergang zugeordneten weiteren Position repräsentiert. Schließlich kann ein Schritt des Aktualisierens des Verhaltensparameters unter Verwendung des Verhaltensparameters, des weiteren Umweltparameters und des weiteren Fahrzeugparameters ausgeführt werden. Auf diese Weise können zeitlich nacheinander auftretende gleiche Arten von Umweltparameteränderungen genutzt werden, um den Verhaltensparameter, der diesem speziellen Übergang zugeordnet ist, zu präzisieren. Der Schritt des Aktualisierens kann ausgeführt werden, wenn eine Änderung des weiteren Umweltparameters um mindestens einen vordefinierten Schwellenwert gegenüber einem zuvor eingelesenen Umweltparameter vorliegt.

Gemäß einer Ausführungsform kann im Schritt des Einlesens eines Umweltparameters neben dem bereits genanten ersten Umweltparameter zumindest ein zweiter Umweltparameter eingelesen werden, der einen zweiten Übergang in dem Umfeld des Fahrzeugs repräsentiert. Im Schritt des Ermittelns kann der Verhaltensparameter unter Verwendung des ersten Umweltparameters, des zweiten Umweltparameters und des ersten Fahrzeugparameters ermittelt werden, wenn ferner eine Änderung des zweiten Umweltparameters um mindestens einen vordefinierten zweiten Schwellenwert gegenüber einem vorangegangenen zweiten Umweltparameter vorliegt. Mit anderen Worten kann der Verhaltensparameter ermittelt werden, wenn eine Änderung des ersten Umweltparameters um mindestens einen vordefinierten ersten Schwellenwert gegenüber einem vorangegangenen Umweltparameter und eine Änderung des zweiten Umweltparameters um mindestens einen vordefinierten zweiten Schwellenwert gegenüber einem vorangegangenen zweiten Umweltparameter vorliegt. Somit kann die Ermittlung eines Verhaltensparameters in Abhängigkeit von zwei oder mehreren Umweltparametern durchgeführt werden, z.B. für Verhaltensparameter "Fahrer bremst bei Gefälle nur, wenn die Fahrbahn nass ist". Somit kann die Auswirkung von zwei verschiedenen Umweltparametern auf denselben Fahrzeugparameter ermittelt werden. Beispiel: Fahrer bremst bei Gefälle nur, wenn die Fahrbahn glatt ist. Der erste Fahrzeugparameter kann in diesem Beispiel die Geschwindigkeit und die beiden Umweltparameter die Steigung und einen Fahrbahnzustand der Fahrbahn darstellen.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 zeigt ein Fahrzeug mit einer Vorrichtung zum Analysieren einer Fahrweise eines Fahrers eines Fahrzeugs gemäß einem Ausführungsbeispiel;
Fig. 2 zeigt eine schematische Darstellung eines Fahrzeugs mit einer Vorrichtung zum Analysieren einer Fahrweise eines Fahrers eines Fahrzeugs gemäß einem Ausführungsbeispiel; und
Fig. 3 zeigt ein Ablaufdiagramm eines Verfahrens zum Analysieren einer Fahrweise eines Fahrers eines Fahrzeugs gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

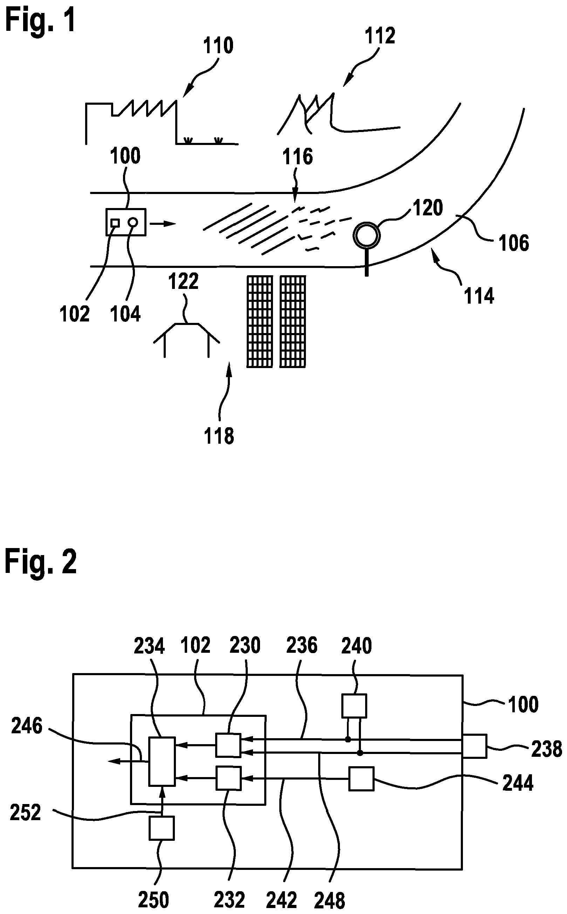

Fig. 1 zeigt ein Fahrzeug 100 mit einer Vorrichtung 102 zum Analysieren einer Fahrweise eines Fahrers 104 des Fahrzeugs 100 gemäß einem Ausführungsbeispiel. Das Fahrzeug 100 wird von dem Fahrer 104 gesteuert und fährt auf einer Straße 106. Beispielhaft sind in einer Fahrtrichtung vor dem Fahrzeug 104 unterschiedliche Arten von Übergängen zwischen Geländeoberflächenformen gezeigt. Ein erster Übergang 110 zeigt einen Übergang zwischen zwei unterschiedlichen Bewuchsformen, beispielsweise einen Übergang von einem bewaldeten Bereich zu einem unbewaldeten Bereich. Ein zweiter Übergang 112 zeigt einen Übergang zwischen zwei unterschiedlichen Landschaftsbildern, beispielsweise einem bergigen Bereich und einem Flachland. Ein dritter Übergang 114 zeigt einen Übergang zwischen zwei unterschiedlichen Fahrbahneigenschaften, beispielsweise einem ebenen Fahrbahnabschnitt und einen eine Neigung aufweisenden Fahrbahnabschnitt. Ein vierter Übergang 116 zeigt einen weiteren Übergang zwischen zwei unterschiedlichen Fahrbahneigenschaften, beispielsweise einem Fahrbahnabschnitt mit einer intakten Oberfläche und einem Fahrbahnabschnitt mit einer schadhaften Oberfläche. Ein fünfter Übergang 118 zeigt einen Übergang zwischen zwei unterschiedlichen Bebauungsformen, beispielsweise einen Übergang zwischen einer niedrigen Bebauung und einer hohen Bebauung.

Wenn das Fahrzeug 100 die Höhe eines der Übergänge 110, 112, 114, 116, 118 erreicht, so kann dies zu einer bewussten oder unbewussten Änderung der Fahrweise des Fahrers 104 führen. Die Änderung der Fahrweise, beispielsweise eine geänderte Betätigung des Gaspedals oder eine Betätigung der Bremse des Fahrzeugs 100 führt zu einer Änderung des Fahrzustands des Fahrzeugs 100. Die Änderung des Fahrzustands kann beispielsweise eine Änderung der Geschwindigkeit des Fahrzeugs 100 oder eine Änderung einer von einem Antrieb des Fahrzeugs bereitgestellten oder aufgenommen Leistung darstellen. Eine entsprechende Änderung der Fahrweise und die daraus resultierende Änderung des Fahrzustands können auch dann erfolgen, wenn das Fahrzeug 100 ein Objekt, beispielsweise ein Verkehrszeichen 120 oder einen Ort von Interesse 122 passiert. Bei dem Verkehrszeichen 120 handelt es sich gemäß einem Ausführungsbeispiel um ein Vorschriftszeichen, oder um mein Gefahrzeichen oder ein Richtzeichen. Alternativ handelt es sich bei dem Verkehrszeichen 120 um ein andersartiges Zeichen. Beispielsweise kann mit dem Verfahren auch die Reaktion des Fahrers auf Geschwindigkeitslimits erfasst werden. So bremsen einige Fahrer generell schon deutlich vor einem Geschwindigkeitslimit, andere punktgenau, wiederum andere bremsen erst später (bzw. rollen aus).

Die Vorrichtung 102 ist ausgebildet, um die Fahrweise des Fahrers 104 beim Passieren der Übergänge 110, 112, 114, 116, 118 oder der Objekte 120,122 zu analysieren. Als Ergebnis einer solchen Analyse ist die Vorrichtung 102 ausgebildet, um einen oder mehrere Verhaltensparameter zu ermitteln, die den Übergängen und zusätzlich oder alternativ den Objekten 120, 122 zugeordnet sind. Ein solcher Verhaltensparameter kann verwendet werden, um vorherzusagen, wie der Fahrer 104 reagieren wird, wenn er zukünftig einen entsprechenden Übergang 110, 112, 114, 116, 118 oder ein entsprechendes Objekt 120, 122 passieren wird.

Die Vorrichtung 102 kann somit zum Lernen individueller Fahrerreaktionen auf Geländeänderungen 110, 112, 114, 116, 118 verwendet werden. Der beschriebene Ansatz kann beispielsweise in Fahrzeugen 100 mit verfügbaren Umgebungsdaten, also statischen oder dynamischen Karten oder einem Navigationsgerät eingesetzt werden. Die Umgebungsdaten können zum Ermitteln eines jeweiligen Umweltparameters verwendet werden. Der einem Umweltparameter zugeordnete Fahrzeugparameter kann unter Verwendung einer geeigneten mit dem Fahrzeug 100 gekoppelten Sensorik bestimmt werden.

Der beschriebene Ansatz kann beispielsweise im Zusammenhang mit einer Betriebsstrategie für ein als Hybridfahrzeug ausgeführtes Fahrzeug 100 eingesetzt werden. Hybridfahrzeuge kombinieren die Vorteile unterschiedlicher Antriebsarten z.B. den verbrennungsmotorischen und elektromotorischen Antrieb. So hat der Verbrennungsmotor im höheren Lastbereich seinen günstigen Verbrauchs- und Emissionsbereich. Der Elektromotor/Generator kommt im niederen Lastbereich, bei dynamischen Lastanforderungen und zur Rekuperation von Bremsenergie zum Einsatz. Um sowohl für den elektromotorischen Antrieb ausreichend elektrische Energie als auch für die Rekuperation ausreichend Speicherreserve im Speicher zu haben, bedarf es eines Speichermanagements. Unter Hinzunahme von prädiktiven Daten aus Umwelt und Verkehr können weitere Potenziale zur Verbrauchseinsparung genutzt werden. Optimierungsverfahren und Algorithmen berechnen je nach geforderten Kriterien (z.B. Kosten und/oder Emissionen) die optimale Aufteilung von elektromotorischem und verbrennungsmotorischem Antrieb und den Lade- und Entlade-Strategien der zugehörigen Speicher. Beispielsweise kann dazu ein vorausschauendes Speichermanagement eingesetzt werden.

Um die Übergänge 110, 112, 114, 116, 118 erkennen zu können und die Übergänge anzeigende Umweltparameter bereitstellen zu können, wird gemäß einem Ausführungsbeispiel auf einen elektronischen Horizont (EH), engl. electronic horizon, auch eHorizon genannt, zurückgegriffen. Unter dem elektronischen Horizont werden insbesondere Fahrbahnsteigung und Kurvenkrümmung, die gesetzliche Geschwindigkeitsbeschränkung, aber auch Zusatzattribute, wie Kreuzungen, Lichtsignalanlagen, Anzahl der Fahrspuren, Tunnel, etc., verstanden. Diese werden in Abhängigkeit von der aktuellen Fahrzeugposition als ortsfeste Attribute entlang der vorausliegenden Strecke ermittelt. Die Bereitstellung des elektronischen Horizonts erfolgt gemäß einem Ausführungsbeispiel durch eine Einrichtung zum Bereitstellen des elektronischen Horizonts, einem sogenannten "Horizon Provider" (HP), welcher z.B. Bestandteil des Navigationssystems sein kann. Die zukünftige Routenwahl des Fahrers 104 kann anhand dessen Eingaben für die Zielführung des Navigationssystems ermittelt werden. Ohne Zielführung wird meist ebenfalls ein "wahrscheinlichster Pfad" (Most Probable Path, MPP) übertragen, der anhand der zugrunde liegenden Straßenklassen oder anhand einer Statistik über bereits gefahrene Strecken ermittelt wird. Optional ermittelt der Horizon Provider alternative Strecken, welche der Fahrer 104 auch wählen könnte. Im Folgenden wird der Begriff "MPP" stellvertretend für die wahrscheinlichste Strecke und mögliche Alternativstrecken verwendet.

Um die Änderung des Fahrzustands des Fahrzeugs 100 zu bestimmen, kann auf sogenannte "Floating Car Data" (FCD) zurückgegriffen werden, die Daten bezeichnen, die aus dem Fahrzeug 100 heraus generiert werden, welches aktuell am Verkehrsgeschehen teilnimmt. Das umfasst sowohl den Zustand des Fahrens als auch den des Stehens, zum Beispiel im Stau, vor Ampeln oder auf einem Warteplatz. Ein Datensatz beinhaltet zumindest den Zeitstempel sowie die aktuellen Koordinaten. Durch den Einsatz eines FCD-Verfahrens wird das Fahrzeug 100 so zu einem mobilen Sensor. Derzeit dienen vor allem Taxiflotten zur Generierung von FCD, da diese für Aufgaben des Flottenmanagements bereits über die notwendige Ausstattung samt Zentrale verfügen.

Um die Übergänge 110, 112, 114, 116, 118 erkennen zu können, kann ferner auf dynamische Straßenkarten zurückgegriffen werden, wie sie auch in mobilen Geräten eingesetzt werden können. Dabei geht es um die Verkehrszeichenerkennung, z.B. fahrzeuggeschwindigkeitsregulierender Verkehrszeichen, mittels einer vorhandenen Kamera und der Übermittlung der Daten an einen Provider der Applikation. Die Applikationsnutzer bekommen dafür eine bzgl. der geschwindigkeitsregulierenden Verkehrszeichen aktuelle Straßenkarte, eine sogenannte dynamische Straßenkarte, die es ermöglicht, Funktionen wie z.B. einen Ausrollassistenten des Fahrzeugs 100 auf korrekten Daten zu realisieren. Ein solcher Ausrollassistent gibt anhand von fahrzeuggeschwindigkeitsregulierenden Verkehrszeichen entlang der Strecke sowie Geländehöhenprofilen, der aktuellen Fahrzeuggeschwindigkeit und Fahrzeugmasse, usw. dem Fahrer 104 Empfehlungen, rechtzeitig vom Gas zu gehen, um bis zur nächsten gebotenen Geschwindigkeit auszurollen, um somit Bremsmanöver zu vermeiden und Kraftstoff zu sparen.

Informationen für eine solche dynamische Karte sind beispielsweise Verkehrszeichen mit Geschwindigkeitsbeschränkungen, Aufhebungen von Geschwindigkeitsbeschränkungen, Ortseinfahrten (sind de facto Geschwindigkeitsbeschränkungen auf 50km/h), Ortsausfahrten (sind de facto Aufhebungen von Geschwindigkeitsbeschränkungen) sowie Kurvenkrümmungen und daraus abgeleitete relevante Kurvengeschwindigkeitspunkte. Zum Aktualisieren der dynamischen Karte kann beispielsweise auf eine Verkehrszeichenerkennung des Fahrzeugs 100 zurückgegriffen werden.

Die Straßenkarte ist elektronisch auf einem Speichermedium z.B. auf einem Server bzw. Cloud Computing gespeichert. Die Fahrer 104 von Kraftfahrzeugen 100 sind mit ihrem mobilen Endgerät über eine Applikation, z.B. Navigation, mit der dynamischen Karte auf dem Server bzw. Cloud Computing mindestens zeitweise verbunden. Alternativ kann die dynamische Karte in einer Speichereinrichtung des Fahrzeugs 100 gespeichert sein.

Um die Übergänge 110, 112, 114, 116, 118 erkennen zu können, kann ferner auf ein Navigationssystem mit prädiktiven Kartendaten zurückgegriffen werden. Die Dateninhalte, die von einem Navigationssystem im Sinne einer Vorausschau anderen Komponenten im Fahrzeug 100 zur Verfügung gestellt werden können, sind abhängig von den Kartendaten, die von den Kartenlieferanten verfügbar sind, und können sich abhängig vom Kartenlieferanten sowohl im Umfang als auch in der Qualität unterscheiden. Derzeit ist davon auszugehen, dass energierelevante Informationen, wie insbesondere Höhen-/ Steigungsprofile, Krümmungen und Geschwindigkeitsprofile nicht flächendeckend verfügbar sind. Insbesondere sind Geschwindigkeitsinformationen und Höhen- oder Steigungsinformationen innerhalb Europas im Wesentlichen auf hochrangige Straßenklassen begrenzt. Entsprechend der Roadmaps der Kartenlieferanten ist die flächendeckende Verfügbarkeit von Höhen-/Steigungsprofilen, Krümmungen und Geschwindigkeitsinformationen für hochrangige Straßen geplant. Allerdings ist die Verfügbarkeit von z.B. Steigungsinformationen für Wohnstraßen in absehbarer Zeit nicht zu erwarten. Es existieren aber Ideen die Fahrzeuge mit ihren Sensoren zu nutzen, um daraus direkt oder indirekt abgeleitete Steigungsinformationen über den gefahrenen Strecken z.B. in den erwähnten dynamischen Karten zu speichern. Zusatzinformationen können somit beispielsweise über Sensoren des Fahrzeugs 100 ermittelt werden.

Der beschriebene Ansatz ermöglicht die Einbeziehung bzw. das Lernen von individuellen systematischen oder ähnlichen Reaktionen des Fahrers 104 auf Fahrwiderstände und Umwelt als auch auf deren Änderungen, um die Prädiktionen der Fahrzeugbewegung und Auswirkung auf energierelevante Funktionen weiter zu verbessern.

Der beschriebene Ansatz basiert auf dem Lernen von individuellen Fahrerreaktionen auf Fahrzeug-Fahrwiderstände und statische Umgebungsinformationen, insbesondere der Geländeoberfläche und deren Änderungen 110, 112, 114, 116, 118 während des Fahrens mit dem Fahrzeug 100.

Ein Vorteil dieses Ansatzes liegt in einer besseren Prädiktion des Geschwindigkeits- und damit des Lastprofils des Fahrzeugs 100. Dadurch kann ein besseres prädiktives Energiemanagement wie z.B. Speichermanagement realisiert werden, was den Energieverbrauch des Fahrzeugs 100 weiter reduzieren kann.

Bei der Prädiktion von Geschwindigkeiten und damit Lastprofilen und damit Energiemanagementfunktionen im Fahrzeug 100 hat sich gezeigt, dass auch statische Umgebungsinformationen insbesondere deren Änderungen 110, 112, 114, 116, 118 entlang der Fahrstrecke 106 einen individuellen Einfluss auf den Fahrer 104 und damit auf die Geschwindigkeitsprofile und damit Lastprofile und damit Energiemanagementfunktionen im Fahrzeug 100 haben.

Ein Beispiel ist die Fahrt auf einer geraden ebenen Straße 106 durch einen Wald die plötzlich auf eine unbewaldete Ebene (z.B. Wiese oder Feld) mündet. Trotzdem es keine Änderungen in den Geschwindigkeitsgeboten gibt gehen einige Fahrer 104 intuitiv erst einmal vom Gaspedal und reduzieren damit mindestens zeitweise die Geschwindigkeit. Bei anderen Fahrern 104 wurde genau das Gegenteil beobachtet. Somit gibt es Einflüsse auf die Fahrweise, die nicht von im Straßenverkehr bekannten und üblichen Größen abhängen.

Umgebungsinformationen, also den Menschen umgebende und beeinflussende Informationen, mit möglichem Einfluss auf den Fahrer 104 bzw. das Fahrerverhalten bei der Fahrzeugsteuerung können statische Umgebungsinformationen oder dynamische Umgebungsinformationen sein.

Unter einer statischen Umgebungsinformation können Geschwindigkeitsvorgaben, wie geschwindigkeitsbeeinflussende Verkehrszeichen, die Fahrbahn (Fahrbahnsteigungen, Kurvenradien, Haftung, Fahrbahnbelag-Rauhigkeit, Querkanten, Spurrinnen, Schlaglöcher, Haftung), die Geländeoberfläche (Berge, Täler, Gewässer, Bebauung, Bewuchs) oder Orte von Interesse verstanden werden. Insbesondere die Geländeoberfläche kann eine bisher nicht beachtete Einflussquelle darstellen. Die statischen Umgebungsinformationen können Einfluss auf die Fahrpsychologie haben. Die statischen Umgebungsinformationen können in einem digitalen Oberflächenmodell (DOM) mit Informationen über die Erdoberfläche (Grenzschicht Pedosphäre - Atmosphäre) samt allen darauf befindlichen Objekten (Bebauung, Straßen, Bewuchs, Gewässer usw.) z.B. in einem Navigationsgerät oder einer dynamischen Karte (Cloud) gespeichert sein.

Unter dynamischen Umgebungsinformationen können Sichtverhältnisse (Licht, Klarheit, Richtung und Intensität der Sonneneinstrahlung), Windverhältnisse, Feuchtigkeit, Regen, Eis/Schnee oder Verkehr sowie Verkehrsdichte verstanden werden. Die dynamischen Umgebungsinformationen können in einer digitalen Wetterkarte und/oder Verkehrskarte z.B. in einem Navigationssystem im Fahrzeug oder einer dynamischen Karte (Cloud) gespeichert sein.

Um das Datenaufkommen zu reduzieren, ist es auch denkbar, nur die größeren Unstetigkeiten oder Änderungen 110, 112, 114, 116, 118 der Umgebung in einer Karte zu speichern.

Gemäß einem Ausführungsbeispiel wird der Umgebungseinfluss, wie beispielsweise Bewuchs oder Bebauung, fahrerindividuell wie folgt gelernt. Dabei können gemäß unterschiedlicher Ausführungsbeispiele alle oder nur einige der im Folgenden genannten Schritte ausgeführt werden.

Zunächst erfolgt eine Feststellung, dass keine Verkehrsbehinderungen vorliegen, das heißt, dass die Strecke vor dem Fahrzeug frei ist. Dazu können Nahfeldsensoren z.B. der Assistenzsysteme genutzt werden sowie streckenbezogene Verkehrsinformationen. Eine solche Information über eine Verkehrsbehinderung kann verwendet werden, um zu entscheiden, ob bezüglich einer aktuellen Situation ein Verhaltensparameter bestimmt wird oder nicht.

Ferner erfolgt eine Bestimmung des Straßentyps, beispielsweise Landstraße oder Autobahn und des Straßenverlaufs, z.B. des Kurvenradius.

Ferner erfolgt eine Bestimmung der zulässigen Geschwindigkeit auf dem relevanten Straßenabschnitt.

Ferner erfolgt eine Feststellung, dass die obigen Daten über einen größeren Horizont konstant bleiben, um den Einfluss vorausschauenden Fahrerverhaltens, z.B. rechtzeitiges Verzögern vor geschwindigkeitsreduzierenden Verkehrszeichen, auszuschließen. Eine entsprechende Information kann beispielsweise unter Verwendung der Daten einer Navigationseinrichtung des Fahrzeugs 100 ermittelt werden. Alternativ wird die Reaktion des Fahrers auf die Verkehrszeichen gelernt.

Ferner werden größere Änderungen in der Geländeoberfläche, wie Bewuchs, Bebauung oder Steigungsänderungen, entlang der gefahrenen Strecke den Änderungen in der Fahrzeuggeschwindigkeit zugeordnet. Als Beispiel wird eine ebene, gerade Strecke auf der 100km/h zugelassen sind sowie ein Geländewechsel 110 von Wald zu Wiese angenommen, bei dem der Fahrer 104 vom Gaspedal geht, was beispielsweise eine absolute Geschwindigkeitsänderung von 100Km/h auf 90Km/h innerhalb von 10 Sekunden bzw. einem bestimmten Streckenabschnitt oder einer relativen Geschwindigkeitsänderung von 10Km/h/seczur Folge hat. Diese Information wird zum Ermitteln eines dem Geländewechsel 110 von Wald zu Wiese zugeordneten Verhaltensparameter verwendet.

Mit dieser Information, also diesem Verhaltensparameter, kann die Vorrichtung 102 oder das Navigationsgerät die geplante Strecke nach gleichen oder ähnlichen Änderungen in der Geländeoberfläche absuchen und damit die Prädiktion der Geschwindigkeit und damit das prädizierte Lastprofil des Fahrzeugs 100 über der Strecke anpassen. Im Beispiel der Verzögerung beim Geländewechsel 110 Wald zu Wiese könnte für eine kurze Phase ein Segelbetrieb des Fahrzeugs 100 angenommen werden und im Energiemanagement und bei den Betriebsstrategien des Fahrzeugs 100 berücksichtigt werden.

Im Folgenden wird ein Ausführungsbeispiel beschrieben, bei dem der Umgebungseinfluss Fahrbahnsteigung, wie er beispielsweise bei der Änderung 114 der Fahrbahnneigung auftritt, gelernt wird. Als Ergebnis des Lernprozesses wird ein weiterer Verhaltensparameter ermittelt, der der Änderung 114 der Fahrbahnneigung zugeordnet ist. Wiederum können gemäß unterschiedlicher Ausführungsbeispiele alle oder nur einige der im Folgenden genannten Schritte ausgeführt werden, um einen entsprechenden Verhaltensparameter zu ermitteln oder zu aktualisieren.

Es wird optional eine Feststellung durchgeführt, dass keine Verkehrsbehinderungen vorliegen (Strecke vor dem Fahrzeug ist frei). Dazu können Nahfeldsensoren z.B. der Assistenzsysteme und streckenbezogene Verkehrsinformationen genutzt werden. Zudem wird optional eine Bestimmung des Straßentyps (Landstraße, Autobahn) und des Straßenverlaufs (z.B. Kurvenradius) durchgeführt. Ferner wird optional eine Bestimmung der zulässigen Geschwindigkeit durchgeführt.

Es wird die Feststellung getätigt, dass die obigen Daten über einen größeren Horizont konstant bleiben, um den Einfluss vorausschauenden Fahrerverhaltens auszuschließen.

Größere Änderungen in der Geländeoberfläche (Bewuchs, Bebauung Steigungsänderungen), hier insbesondere die Steigungsänderung, entlang der gefahrenen Strecke werden Änderungen in der Fahrzeuggeschwindigkeit zugeordnet (z.B. ebene, gerade Strecke, Geländewechsel 114 von Ebene zu bergab, mindestens 1000m mit 15% Gefälle: Fahrer geht vom Gaspedal und bremst zusätzlich, absolute Geschwindigkeitsänderung von 100Km/h auf 90Km/h innerhalb von 10 Sekunden bzw. einem bestimmten Streckenabschnitt oder einer relativen Geschwindigkeitsänderung von -10Km/h/sec). Dabei wird gemäß einem Ausführungsbeispiel nur dann ein Verhaltensparameter ermittelt oder aktualisiert, wenn neben der Steigungsänderung keine zusätzliche Änderung in der Geländeoberfläche vorliegt, die ebenfalls zu einer durch den Fahrer bewirkten Geschwindigkeitsänderung führen könnte.

Mit dieser Information kann das Navigationsgerät die geplante Strecke nach gleichen oder ähnlichen Änderungen in der Geländeoberfläche der geplanten Route absuchen und die Prädiktion der Geschwindigkeit und damit das prädizierte Lastprofil des Fahrzeugs 100 anpassen. Im Beispiel der Verzögerung Bergabfahrt könnte für eine kurze Phase eine Bremsrekuperation des Fahrzeugs angenommen werden und im Energiemanagement und Betriebsstrategien berücksichtigt werden.

Ähnlich kann eine Bergauffahrt gelernt werden.

Zur Ermittlung des Verhaltensparameters wird gemäß einem Ausführungsbeispiel eine Plausibilitätsprüfung durchgeführt, bei der überprüft wird, ob eine Reaktion des Fahrers 104 bei einem Geländewechsel 110, 112, 114, 116, 118 oder bei Passieren eines Objekts 120, 112 eine bezüglich der jeweiligen Situation zu erwartende Reaktion darstellt. Ist dies nicht der Fall, beispielsweise wenn der Fahrer 104 bei einer Bergauffahrt bremst, so kann durch die Plausibilitätsprüfung bewirkt werden, dass für diese Situation keine Ermittlung oder Aktualisierung des Verhaltensparameters durchgeführt wird.

Die Erkennung des Zusammenhangs zwischen einer Geschwindigkeitsänderung und einem oder mehreren Umweltparametern erfolgt gemäß einem Ausführungsbeispiel über ein entsprechendes statistisches Verfahren, zum Beispiel über eine Korrelationsanalyse nach Pearson. Es können auch komplexere Verfahren zur Korrelationsanalyse eingesetzt werden, um nichtlineare Zusammenhänge zu erkennen und um die Robustheit gegenüber statistischen Ausreißern zu erhöhen.

Gemäß einem Ausführungsbeispiel genügt bereits ein Wechsel 110, 112, 114, 116, 118 um einen Verhaltensparameter zu ermitteln. Je mehr Wechsel 110, 112, 114, 116, 118 gleicher Art berücksichtigt werden, umso genauer kann der jeweilige Verhaltensparameter bestimmt werden.

Um den Zusammenhang zwischen Umweltparametern und der Geschwindigkeit herzustellen, werden gemäß einem Ausführungsbeispiel sowohl die Änderungen von Umweltparametern als auch die Geschwindigkeitsänderungen, beispielsweise in Form von Fahrzeugparametern, als binäre Zufallsvariablen aufgefasst. Der Korrelationskoeffizient nach Pearson der beiden Zufallsvariablen lässt darauf schließen, ob ein linearer statistischer Zusammenhang zwischen der Änderung des Umweltparameters und der Geschwindigkeitsänderung besteht. Die Geschwindigkeitsänderung kann absolut oder relativ sein und es kann auch die Zeitdauer der Änderung berücksichtigt werden. Es werden die Korrelationskoeffizienten jeder deutlichen Geschwindigkeitsänderung mit jeder gleichzeitig (bzw. in zeitlicher Nähe) erfolgten Änderung eines Umweltparameters berechnet, um möglichst viele Zusammenhänge zu erkennen. Die Änderung eines Umweltparameters kann z.B. der Übergang 110 von bewaldetem Gebiet auf eine Wiese sein. Eine entsprechende beispielhafte Definition der binären Zufallsvariable X einer Geschwindigkeitsänderung lautet:
X=1, wenn das Ereignis A eintritt;
X=0, sonst.

Dabei repräsentiert das Ereignis A lediglich beispielhaft eine Geschwindigkeitsreduzierung um mindestens 10 km/h innerhalb von höchstens 3 Sekunden. Analog wird die Zufallsvariable Y eines Umweltparameters definiert:
Y=1, wenn das Ereignis B eintritt;
Y=0, sonst.

Hier repräsentiert das Ereignis B den Übergang 110 von bewaldetem Gebiet auf eine Wiese.

Wenn der Korrelationskoeffizient Kor(X,Y) der Geschwindigkeitsänderung A und der Umweltparameteränderung B einen definierten Schwellenwert überschreitet (z.B. 0,9) und Kor(X,Y) auf ausreichend vielen Werten beruht (z.B. 15 Geschwindigkeitsänderungen), dann wird angenommen, dass sich die Geschwindigkeit auch zukünftig gemäß A verändern wird, wenn sich der Umweltparameter gemäß B ändert.

Weiterhin wird überprüft, ob eine Änderung der Geschwindigkeit eventuell nur dann erfolgt, wenn eine bestimmte Kombination von Umweltparametern vorliegt. Auf diese Weise kann beispielsweise erkannt werden, dass der Fahrer 104 vor dem Übergang auf ein starkes Gefälle nur dann bremst, wenn die Fahrbahn 106 nass ist. Hierfür wird eine weitere Zufallsvariable Z verwendet, welche analog zur Definition von Y genau dann den Wert 1 annimmt, wenn die Fahrbahn 106 nass ist (Ereignis C). Es wird der Korrelationskoeffizient Kor(X,Y*Z) berechnet. Die Zufallsvariable Y*Z ist genau dann 1, wenn sowohl Y als auch Z den Wert 1 haben, wenn also sowohl das Ereignis B als auch das Ereignis C eingetreten sind. Wenn beispielsweise
Kor(X, Y)=0,3
Kor(X,Z)=0,2
Kor(X,Y*Z)=0,9
gilt, dann wird daraus geschlossen, dass A nur dann häufig vorliegt, wenn auch B und C gleichzeitig vorliegen. Eine Kombination von mehr als zwei Umweltparametern erfolgt auf die gleiche Weise.

Die Aufzeichnung der Änderungen von Geschwindigkeit und Umweltparametern sowie die Berechnung der Korrelation erfolgt separat für verschiedene Fahrer 104. Es wird vorausgesetzt, dass verschiedene Fahrer 104 vom System unterschieden werden können.

Alternativ könnten die Geschwindigkeitsänderungen auch orts- und zeitbezogen gelernt werden, d.h. die entsprechenden Informationen werden jeweils zusammen mit einer Georeferenz (z.B. GPS-Position und Richtung) und Datum/Zeitstempel in einer Datenbank abgespeichert. Beim Beispiel des Übergangs zwischen Wiese und Wald würden also Position und Richtung des Fahrzeugs 100 zusammen mit der Information, dass der Fahrer 104 dort die Geschwindigkeit um 20km/h oder um 2 km/h/sec, also absolut oder relativ, reduziert hat, abgespeichert. Auf Basis einer statistischen Auswertung einer solchen Datenbank kann festgestellt werden, dass der Fahrer 104 die Geschwindigkeit an dieser Stelle immer in dieser Größenordnung reduziert, womit zukünftig eine genaue Prognose der Geschwindigkeitsänderung möglich ist. Der Vorteil dieser Variante ist, dass keine Kenntnis von Umweltinformationen erforderlich ist. Es werden also weniger Sensoren benötigt und die Anforderungen an die digitale Navigationskarte sind geringer. Diese Variante funktioniert optimal auf Strecken, die der Fahrer 104 bereits mehrfach gefahren ist. Alternativ kann, sofern keine Daten für den Fahrer 104 vorliegen, behelfsweise auf gespeicherte Daten anderer Fahrer zurückgegriffen werden.

Fig. 2 zeigt eine schematische Darstellung eines Fahrzeugs 100 mit einer Vorrichtung 102 zum Analysieren einer Fahrweise eines Fahrers eines Fahrzeugs gemäß einem Ausführungsbeispiel. Dabei kann es sich um das anhand von Fig . 1 gezeigte Fahrzeug handeln. Die Vorrichtung 102 weist eine erste Einleseeinrichtung 230, eine zweite Einleseeinrichtung 232 und eine Ermittlungseinrichtung 234 auf.

Die erste Einleseeinrichtung 230 ist ausgebildet, um einen Umweltparameter 236 einzulesen, der beispielsweise einen Übergang zwischen zwei unterschiedlichen Geländeoberflächenformen anzeigt, wie sie beispielhaft anhand von Fig. 1 beschrieben sind. Gemäß einem Ausführungsbeispiel umfasst der Umweltparameter 236 eine Information über die Art des Übergangs und eine Position des Übergangs. Beispielsweise ist die erste Einleseeinrichtung 230 ausgebildet, um den Umweltparameter 236 über eine Schnittstelle zu einer Sensorik, beispielsweise einer Umfelderfassungsseinsrichtung 238, oder einer Speichereinrichtung 240 des Fahrzeugs 100 einzulesen. Der Umweltparameter 236 kann beispielsweise Bestandteil des anhand von Fig. 1 beschriebenen elektronischen Horizonts oder der genannten dynamischen oder statischen Karte sein.

Die zweite Einleseeinrichtung 232 ist ausgebildet, um einen Fahrzeugparameter 242 einzulesen. Der Fahrzeugparameter 242 zeigt eine Änderung eines Fahrzustands des Fahrzeugs 100 an einer dem Übergang zugeordneten Position an. Beispielsweise ist die zweite Einleseeinrichtung 232 ausgebildet, um den Fahrzeugparameter 242 über eine Schnittstelle zu einer weiteren Sensorik, beispielsweise einer Geschwindigkeitserfassungseinrichtung 244 des Fahrzeugs 100 einzulesen. In diesem Fall umfasst der Fahrzeugparameter 242 beispielsweise eine Information über eine Geschwindigkeitsänderung des Fahrzeugs 100 auf Höhe des Übergangs. Der Fahrzeugparameter 242 kann auch als Bestandteil der anhand von Fig. 1 beschriebenen Floating Car Data bereitgestellt werden.

Die Ermittlungseinrichtung 234 ist ausgebildet, um unter Verwendung des Umweltparameters 236 und des Fahrzeugparameters 242 einen Verhaltensparameter 246 zu ermitteln und bereitzustellen. Der Verhaltensparameter 246 umfasst eine Information über eine durch den Übergang an der Position des Übergangs hervorgerufene Änderung des Fahrzustands des Fahrzeugs 100 und somit der Fahrweise des Fahrers.

Gemäß einem Ausführungsbeispiel ist die erste Einleseeinrichtung 230 ausgebildet, um entsprechend zu dem Umweltparameter 236 einen Objektparameter 248 einzulesen, der ein Objekt im Umfeld des Fahrzeugs 100 anzeigt, wie es beispielhaft anhand von Fig. 1 beschrieben ist. Gemäß einem Ausführungsbeispiel umfasst der Objektparameter 248 eine Information über eine Art des Objekts und eine Position des Objekts. Die Ermittlungseinrichtung 234 ist in entsprechender Weise ausgebildet ausgebildet, um unter Verwendung des Objektparameters 248 und einem Fahrzeugparameter 242, der eine Änderung des Fahrzustands des Fahrzeugs 100 auf Höhe bzw. in der Nähe der Position des Objekts anzeigt, einen weiteren Verhaltensparameter 246 zu ermitteln und bereitzustellen. Der weitere Verhaltensparameter 246 umfasst in diesem Fall eine Information über eine durch das Objekt an der Position des Objekts hervorgerufene Änderung der Fahrweise des Fahrers.

Gemäß einem Ausführungsbeispiel ist die Vorrichtung 102 ausgebildet, um für unterschiedliche Arten von Übergängen oder Objekten unterschiedliche Verhaltensparameter 246 zu ermitteln.

Gemäß einem Ausführungsbeispiel ist die Vorrichtung 102 ausgebildet, um einen bereits bestehenden Verhaltensparameter 246 zu aktualisieren, wenn das Fahrzeug 100 einen weiteren Übergang passiert, der von seiner Art her einem Übergang entspricht, für den der bestehende Verhaltensparameter 246 ermittelt wurde. Dazu weist die Vorrichtung 102 eine Aktualisierungseinrichtung auf, die ausgebildet ist, um den bestehenden Verhaltensparameter 246 unter Verwendung eines aktuellen Umweltparameters und eines aktuellen Fahrzeugparameters zu aktualisieren.

Gemäß einem Ausführungsbeispiel ist die Ermittlungseinrichtung 234 ausgebildet, um den Verhaltensparameter 246 nur dann zu ermitteln oder einen bestehenden Verhaltensparameter 246 nur dann zu aktualisieren, wenn auf Höhe des genannten Übergangs oder Objekts keine Verkehrsbehinderung vorliegt. Dazu ist die Vorrichtung 102 ausgebildet, um über eine Schnittstelle zu einer Einrichtung 250 zum Anzeigen einer Verkehrsbehinderung eine Information 252 über eine eventuelle Verkehrsbehinderung zu empfangen.

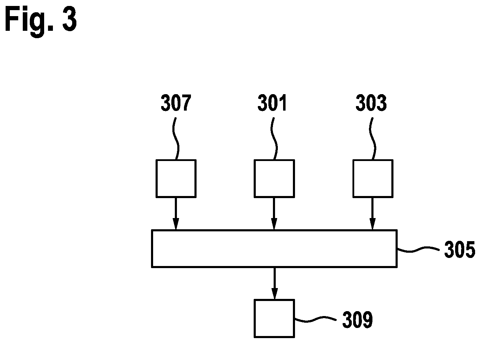

Fig. 3 zeigt ein Ablaufdiagramm eines Verfahrens zum Analysieren einer Fahrweise eines Fahrers eines Fahrzeugs gemäß einem Ausführungsbeispiel. Das Verfahren kann beispielsweise unter Verwendung einer Vorrichtung ausgeführt werden, wie sie anhand der vorangegangenen Figuren beschrieben ist. Das Verfahren weist einen Schritt 301 auf, in dem ein Umweltparameter eingelesen wird und einen Schritt 303 auf, in dem ein Fahrzeugparameter eingelesen wird. Ferner weist das Verfahren einen Schritt 305 auf, in dem unter Verwendung des Umweltparameters und des Fahrzeugparameters ein Verhaltensparameter ermittelt wird.

Gemäß einem Ausführungsbeispiel weist das Verfahren einen Schritt 307 auf, in dem ein Objektparameter eingelesen wird. Alternativ kann ein solcher Objektparameter im Schritt 301 eingelesen werden. Gemäß diesem Ausführungsbeispiel wird der Verhaltensparameter im Schritt 305 unter Verwendung des Objektparameters und des Fahrzeugparameters ermittelt.

Die Schritte 301, 303, 305 können wiederholt ausgeführt werden, um für verschiedene Arten von Übergängen und verschiedene Arten von Objekten jeweils einen zugeordneten Verhaltensparameter ermitteln zu können.

Gemäß einem Ausführungsbeispiel weist das Verfahren einen Schritt 309 auf, in dem ein bestehender Verhaltensparameter unter Verwendung eines weiteren Umweltparameters bzw. eines weiteren Objektparameters sowie eines weiteren Fahrzeugparameters aktualisiert wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Analysieren einer Fahrweise eines Fahrers (104) eines Fahrzeugs (100), wobei das Verfahren die folgenden Schritte umfasst:
Einlesen (301) eines Umweltparameters (236), der einen Übergang (110, 112, 114, 116, 118) in einem Umfeld des Fahrzeugs (100) repräsentiert;
Einlesen (303) eines Fahrzeugparameters (242), der eine Änderung eines Fahrzustands des Fahrzeugs (100) in der Nähe einer dem Übergang (110, 112, 114, 116, 118) zugeordneten Position repräsentiert; und
Ermitteln (305) eines Verhaltensparameters (246) unter Verwendung des Umweltparameters (236) und des Fahrzeugparameters (242), wenn eine Änderung des Umweltparameters (236) um mindestens einen vordefinierten Schwellenwert gegenüber einem vorangegangenen Umweltparameter vorliegt, wobei der Verhaltensparameter (246) eine durch den Übergang (110, 112, 114, 116, 118) hervorgerufene Änderung einer Fahrweise des Fahrers (104) repräsentiert.

2. Verfahren gemäß Anspruch 1, bei dem der Umweltparameter (236) einen Übergang (110, 112, 114, 116, 118) zwischen zwei unterschiedlichen Geländeoberflächenformen, einen Übergang (110) zwischen zwei unterschiedlichen Bewuchsformen, einen Übergang (114, 116) zwischen zwei unterschiedlichen Fahrbahneigenschaften, einen Übergang (112) zwischen zwei unterschiedlichen Landschaftsbildern oder einen Übergang (118) zwischen zwei unterschiedlichen Bebauungsformen repräsentiert.

3. Verfahren gemäß einem der vorangegangenen Ansprüche, bei dem der Fahrzeugparameter (242) eine Geschwindigkeitsänderung des Fahrzeugs (100) repräsentiert und der Fahrzeugparameter (242) im Schritt des Einlesens über eine Schnittstelle zu einem die Geschwindigkeit des Fahrzeugs (100) erfassenden Geschwindigkeitssensor (244) eingelesen wird.

4. Verfahren gemäß einem der vorangegangenen Ansprüche, mit einem Schritt des Einlesens einer Information (252) über eine Verkehrsbehinderung im Bereich der Position des Übergangs (110, 112, 114, 116, 118), wobei der Schritt des Ermittelns des Verhaltensparameters (246) abhängig von der Information (252) über die Verkehrsbehinderung ausgeführt wird.

5. Verfahren gemäß einem der vorangegangenen Ansprüche, mit einem Schritt des Einlesens (307) eines Objektparameters (248), der ein Objekt (120, 122) in einem Umfeld des Fahrzeugs (100) repräsentiert, wobei im Schritt des Einlesens (303) des Fahrzeugparameters (242), der Fahrzeugparameter (242) eine Änderung des Fahrzustands des Fahrzeugs (100) in der Nähe einer dem Objekt (120, 122) zugeordneten Position repräsentiert, und im Schritt des Ermittelns (305) ein weiterer Verhaltensparameter (246) unter Verwendung des Objektparameters (248) und des Fahrzeugparameters (242) ermittelt wird, wobei der weitere Verhaltensparameter (246) eine durch das Objekt (120, 122) hervorgerufene Änderung der Fahrweise des Fahrers (104) repräsentiert.

6. Verfahren gemäß Anspruch 5, bei dem der Objektparameter (248) ein Objekt (120) in Form eines Verkehrszeichens oder ein Objekt (122) in Form eines Orts von Interesse oder ein Objekt (122) in Form eines anderen Fahrzeugs repräsentiert.

7. Verfahren gemäß einem der vorangegangenen Ansprüche, bei dem der Schritt des Einlesens (301) eines Umweltparameters (236) wiederholt ausgeführt wird, um einen weiteren Umweltparameter (236) einzulesen, der Schritt des Einlesens (303) eines Fahrzeugparameters wiederholt ausgeführt wird, um einen weiteren Fahrzeugparameter (242) einzulesen, und ein Schritt des Aktualisierens (309) des Verhaltensparameters (246) unter Verwendung des Verhaltensparameters (246), des weiteren Umweltparameters (236) und des weiteren Fahrzeugparameters (242) ausgeführt wird.

8. Verfahren gemäß einem der vorangegangenen Ansprüche, bei dem im Schritt des Einlesens (301) eines Umweltparameters zumindest ein zweiter Umweltparameter eingelesen wird, der einen zweiten Übergang (110, 112, 114, 116, 118) in dem Umfeld des Fahrzeugs (100) repräsentiert, und im Schritt des Ermittelns (305) der Verhaltensparameter (246) unter Verwendung des ersten Umweltparameters, des zweiten Umweltparameters und des ersten Fahrzeugparameters ermittelt wird, wenn eine Änderung des ersten Umweltparameters um mindestens einen vordefinierten ersten Schwellenwert gegenüber einem vorangegangenen Umweltparameter und eine Änderung des zweiten Umweltparameters um mindestens einen vordefinierten zweiten Schwellenwert gegenüber einem vorangegangenen zweiten Umweltparameter vorliegt.

9. Vorrichtung (102) zum Analysieren einer Fahrweise eines Fahrers (104) eines Fahrzeugs (100) aufweisend eine erste Einleseeinrichtung (230), eine zweite Einleseeinrichtung (232) und eine Ermittlungseinrichtung (234), die eingerichtet ist, das Verfahren gemäß einem der vorangegangenen Ansprüche auszuführen.

10. Computerprogramm, umfassend Befehle, die bewirken, dass die Vorrichtung des Anspruchs 9 die Verfahrensschritte nach Ansprüche 1 bis 8 ausführt.

11. Maschinenlesbares Speichermedium, auf dem das Computerprogramm nach Anspruch 10 gespeichert ist.

## Claims

1. Method for analysing a driving manner of a driver (104) of a vehicle (100), the method comprising the following steps:
reading in (301) an environmental parameter (236), which represents a transition (110, 112, 114, 116, 118) in an environment of the vehicle (100);
reading in (303) a vehicle parameter (242), which represents a change of a driving state of the vehicle (100) in the vicinity of a position associated with the transition (110, 112, 114, 116, 118); and
determining (305) a behavioural parameter (246) by using the environmental parameter (236) and the vehicle parameter (242) if there is a change in the environmental parameter (236) by at least a predefined threshold value with respect to a previous environmental parameter, wherein the behavioural parameter (246) represents a change in a driving manner of the driver (104) caused by the transition (110, 112, 114, 116, 118).

2. Method according to Claim 1, in which the environmental parameter (236) represents a transition (110, 112, 114, 116, 118) between two different forms of terrain surface, a transition (110) between two different forms of vegetation, a transition (114, 116) between two different characteristics of roadway, a transition (112) between two different types of landscape or a transition (118) between two different types of development.

3. Method according to one of the preceding claims, in which the vehicle parameter (242) represents a change in speed of the vehicle (100) and, in the reading-in step, the vehicle parameter (242) is read in via an interface with a speed sensor (244) sensing the speed of the vehicle (100).

4. Method according to one of the preceding claims, with a step of reading in information (252) concerning a traffic hold-up in the region of the position of the transition (110, 112, 114, 116, 118), wherein the step of determining the behavioural parameter (246) is performed dependent on the information (252) concerning the traffic hold-up.

5. Method according to one of the preceding claims, with a step of reading in (307) an object parameter (248), which represents an object (120, 122) in an environment of the vehicle (100), wherein, in the step of reading in (303) the vehicle parameter (242), the vehicle parameter (242) represents a change of the driving state of the vehicle (100) in the vicinity of a position associated with the object (120, 122), and, in the determining step (305), a further behavioural parameter (246) is determined by using the object parameter (248) and the vehicle parameter (242), wherein the further behavioural parameter (246) represents a change of the driving manner of the driver (104) caused by the object (120, 122).

6. Method according to Claim 5, in which the object parameter (248) represents an object (120) in the form of a traffic sign or an object (122) in the form of a place of interest or an object (122) in the form of another vehicle.

7. Method according to one of the preceding claims, in which the step of reading in (301) an environmental parameter (236) is performed again in order to read in a further environmental parameter (236), the step of reading in (303) a vehicle parameter is performed again in order to read in a further vehicle parameter (242), and a step of updating (309) the behavioural parameter (246) is performed by using the behavioural parameter (246), the further environmental parameter (236) and the further vehicle parameter (242).

8. Method according to one of the preceding claims, in which, in the step of reading in (301) an environmental parameter, at least a second environmental parameter, which represents a second transition (110, 112, 114, 116, 118) in the environment of the vehicle (100), is read in, and, in the determining step (305), the behavioural parameter (246) is determined by using the first environmental parameter, the second environmental parameter and the first vehicle parameter if there is a change of the first environment parameter by at least a predefined first threshold value with respect to a previous environmental parameter and a change of the second environmental parameter by at least a predefined second threshold value with respect to a previous second environmental parameter.

9. Apparatus (102) for analysing a driving manner of a driver (104) of a vehicle (100) having a first reading-in device (230), a second reading-in device (232) and a determining device (234), which is designed to perform the method according to one of the preceding claims.

10. Computer program, comprising commands which have the effect that the apparatus of Claim 9 performs the method steps according to Claims 1 to 8.

11. Machine-readable storage medium on which the computer program according to Claim 10 is stored.

## Revendications

1. Procédé permettant d'analyser un mode de conduite d'un conducteur (104) d'un véhicule (100), le procédé comprenant les étapes suivantes consistant à :
lire (301) un paramètre environnemental (236) qui représente une transition (110, 112, 114, 116, 118) dans un environnement du véhicule (100) ;
lire (303) un paramètre de véhicule (242) qui représente un changement d'un état de conduite du véhicule (100) à proximité d'une position associée à la transition (110, 112, 114, 116, 118) ; et
déterminer (305) un paramètre de comportement (246) en utilisant le paramètre environnemental (236) et le paramètre de véhicule (242) si un changement du paramètre environnemental (236) d'au moins une valeur seuil prédéfinie par rapport à un paramètre environnemental précédent est présent, le paramètre de comportement (246) représentant un changement d'un mode de conduite du conducteur (104), provoqué par la transition (110, 112, 114, 116, 118).

2. Procédé selon la revendication 1, dans lequel le paramètre environnemental (236) représente une transition (110, 112, 114, 116, 118) entre deux formes de surface de terrain différentes, une transition (110) entre deux formes de végétation différentes, une transition (114, 116) entre deux propriétés de chaussée différentes, une transition (112) entre deux paysages différents ou une transition (118) entre deux formes de constructions différentes.

3. Procédé selon l'une quelconque des revendications précédentes, dans lequel le paramètre de véhicule (242) représente un changement de vitesse du véhicule (100), et le paramètre de véhicule (242) est lu à l'étape de lecture par l'intermédiaire d'une interface avec un capteur de vitesse (244) détectant la vitesse du véhicule (100).

4. Procédé selon l'une quelconque des revendications précédentes, comprenant une étape de lecture d'une information (252) concernant un problème de circulation au niveau de la position de la transition (110, 112, 114, 116, 118), l'étape de détermination du paramètre de comportement (246) étant effectuée en fonction de l'information (252) sur le problème de circulation.

5. Procédé selon l'une quelconque des revendications précédentes, comprenant une étape de lecture (307) d'un paramètre d'objet (248) qui représente un objet (120, 122) dans un environnement du véhicule (100), dans lequel, à l'étape de lecture (303) du paramètre de véhicule (242), le paramètre de véhicule (242) représente un changement de l'état de conduite du véhicule (100) à proximité d'une position associée à l'objet (120, 122), et à l'étape de détermination (305), un paramètre de comportement supplémentaire (246) est déterminé en utilisant le paramètre d'objet (248) et le paramètre de véhicule (242), le paramètre de comportement supplémentaire (246) représentant un changement du mode de conduite du conducteur (104) provoqué par l'objet (120, 122).

6. Procédé selon la revendication 5, dans lequel le paramètre d'objet (248) représente un objet (120) sous la forme d'un panneau routier ou un objet (122) sous la forme d'un point d'intérêt ou un objet (122) sous la forme d'un autre véhicule.

7. Procédé selon l'une quelconque des revendications précédentes, dans lequel l'étape de lecture (301) d'un paramètre environnemental (236) est effectuée à plusieurs reprises afin de lire un paramètre environnemental supplémentaire (236), l'étape de lecture (303) d'un paramètre de véhicule est effectuée à plusieurs reprises afin de lire un paramètre de véhicule supplémentaire (242), et une étape de mise à jour (309) du paramètre de comportement (246) est effectuée en utilisant le paramètre de comportement (246), le paramètre environnemental supplémentaire (236) et le paramètre de véhicule supplémentaire (242).

8. Procédé selon l'une quelconque des revendications précédentes, dans lequel, à l'étape de lecture (301) d'un paramètre environnemental, au moins un deuxième paramètre environnemental est lu qui représente une deuxième transition (110, 112, 114, 116, 118) dans l'environnement du véhicule (100), et à l'étape de détermination (305) du paramètre de comportement (246) en utilisant le premier paramètre environnemental, le deuxième paramètre environnemental et le premier paramètre de véhicule, il est déterminé si un changement du premier paramètre environnemental d'au moins une première valeur seuil prédéfinie par rapport à un paramètre environnemental précédent et un changement du deuxième paramètre environnemental d'au moins une deuxième valeur seuil prédéfinie par rapport à un deuxième paramètre environnemental précédent sont présentes.

9. Dispositif (102) permettant d'analyser un mode de conduite d'un conducteur (104) d'un véhicule (100), présentant un premier dispositif de lecture (230), un deuxième dispositif de lecture (232) et un deuxième dispositif de détermination (234) qui est aménagé pour exécuter le procédé selon l'une quelconque des revendications précédentes.

10. Programme informatique, comprenant des instructions qui font que le dispositif selon la revendication 9 exécute les étapes de procédé selon les revendications 1 à 8.

11. Support de stockage lisible par machine sur lequel est stocké le programme informatique selon la revendication 10.
